# EUROPÄISCHE PATENTSCHRIFT

(11) **EP 1 101 187 B1**
(45) Veröffentlichungstag und Bekanntmachung des Hinweises auf die Patenterteilung: **30.06.2004**
(21) Anmeldenummer: 00942006.8
(22) Anmeldetag: 31.05.2000
(51) Int. Cl.: G06K 9/20

(54) **ANORDNUNG ZUR ERFASSUNG VON OBERFLÄCHENSTRUKTUREN VON FINGERN UND/ODER HANDINNENFLÄCHEN**
ASSEMBLY FOR DETECTING THE SUPERFICIAL STRUCTURES OF FINGERS AND/OR PALMS
DISPOSITIF POUR DETECTER DES STRUCTURES SUPERFICIELLES DE DOIGTS ET/OU DES SURFACES INTERIEURES DE MAINS

(30) Priorität: 04.06.1999 DE 19927025
(43) Veröffentlichungstag der Anmeldung: 23.05.2001
(73) Patentinhaber: Smiths Heimann Biometrics GmbH, 07743 Jena (DE)
(72) Erfinder: HILLMANN, Jürgen, D-07745 Jena (DE); RICHTER, Uwe, D-07745 Jena (DE)
(74) Vertreter: Niestroy, Manfred
(86) Internationale Anmeldenummer: PCT/EP2000/004974
(87) Internationale Veröffentlichungsnummer: WO 2000/075858

(56) Entgegenhaltungen:
- DE-A- 4 421 243
- DE-C- 4 103 646

## Beschreibung

### Gebiet der Erfindung

Die Erfindung bezieht sich auf eine Anordnung zur Erfassung der Oberflächenstrukturen von auf einer Bildabtastfläche aufliegenden Fingern, Handinnenflächen oder anderen Hautpartien, wobei die Bildabtastfläche an einem Abtastprisma ausgebildet ist, im Inneren des Abtastprismas ein Beleuchtungsstrahlengang auf die Bildabtastfläche gerichtet ist und das von dort reflektierte Licht auf die Empfangsfläche einer optoelektronischen Detektionseinrichtung trifft.

### Stand der Technik

Anordnungen dieser Art sind, wie andere optische Präzisionsgeräte auch, bei denen Bildinformationen durch Scannen erfaßt werden, gerätetechnisch zu kontrollieren und zu kalibrieren, um die Funktionsfähigkeit und die Genauigkeitsanforderungen zu gewährleisten.

So ist beispielsweise bei einem Zeilenbildabtaster, der mit einer Bildabtastfläche, einer Sensorzeile und einem mechanischen Antrieb zur Verschiebung der Sensorzeile ausgestattet ist, nach Patentschrift DE 41 03 646 C1 vorgesehen, die geometrische Kalibrierung anhand von Referenzmarkierungen vorzunehmen, die an einem senkrecht zur Sensorzeile liegenden Rand der Bildabtastfläche angebracht sind und die sich bei der Bildabtastung auf der Sensorzeile abbilden. Die so im Verlaufe einer Abtastung gewonnenen Abbildungen der Referenzmarkierungen werden dazu genutzt, die Verschiebegeschwindigkeit zu kontrollieren und gegebebenfalls zu korrigieren und auf diese Weise Verzerrungen auszugleichen, die durch eine vom Sollwert abweichende Verschiebegeschwindigkeit verursacht sind. Zur Kalibrierung von Geräten mit einem ruhenden Flächenbildabtaster ist dieser Vorschlag allerdings nicht geeignet.

Bei Geräten, die über einen ruhenden Flächenbildabtaster, beispielsweise ein Array von Einzelsensoren verfügen, ist es bisher üblich, daß bei der Auslieferung an den Anwender Referenzstrukturen beigefügt sind, die im Verlaufe der Betriebsdauer immer wieder als Vergleichsgrundlage mit den Ergebnissen dienen, die mit derselben Anordnung erzielt werden. Anhand dieser Referenzstrukturen können Anwender bzw. Serviceunternehmen von Zeit zu Zeit überprüfen, ob die Qualitätsparameter beibehalten worden sind oder sich aufgrund irgendwelcher Einflüsse, beispielsweise durch Alterung oder Verschleiß von Baugruppen, Abweichungen ergeben haben, die korrigiert werden müssen. Überprüfungen der Gerätefunktion sind häufig auch nach einer Gerätedemontage, etwa zu Reinigungszwecken, erforderlich.

Die Referenzstrukturen sind in Form von Teststrukturen auf einen Träger aufgebracht, beispielsweise auf eine Folie, die zur Überprüfung der Gerätefunktion auf die Bildabtastfläche aufgelegt wird. Die Teststrukturen werden mit dem Gerät aufgenommen und das Ergebnis der Aufnahme anschließend mit der Teststruktur verglichen. Anhand dieses Vergleiches ist eine Aussage möglich, ob die Anordnung den Qualitätsanforderungen nach wie vor entspricht oder sich Veränderungen ergeben haben. Danach ist die Folie mit den Teststrukturen von der Bildabtastfläche zu entfernen, die nun wieder der Erfassung der Oberflächenstrukuren von Fingern bzw. Handinnenflächen zur Verfügung steht.

Hierbei werden sowohl für den Gerätetest als auch zur Erfassung der Oberflächenstrukturen der Finger bzw. Handinnenflächen dieselben Bereiche der Bildabtastfläche genutzt. Um eine Verfälschung des Überprüfungsergebnisses von vornherein zu vermeiden ist es erforderlich, die Bildabtastfläche vor dem Auflegen der Folie gründlich zu reinigen. Außerdem muß die Folie vorsichtig aufbewahrt und gehandhabt werden, damit sie nicht beschädigt wird, und sie muß auch sorgfältig aufgelegt werden, damit der optische Kontakt mit der Bildabtastfläche gegeben ist. In diesem Zusammenhang wird oftmals das Einbringen eines optischen Koppelmediums, etwa Öl oder Wasser, zwischen die Bildabtastfläche und die Folie empfohlen. Aber auch hierbei ergibt sich die Gefahr der Verfälschung des Ergebnisses, wenn nämlich zu große oder auch zu unterschiedliche Schichtdicken zwischen der Bildabtastfläche und der Folie entstehen.

Die vorbeschriebene Verfahrensweise zur Kalibrierung wird beispielsweise durch das Federal Bureau of Investigation (FBI) der USA für automatische Fingerabdruck-Identifikationssysteme vorgeschrieben, die zu erkennungsdienstlichen Zwecken eingesetzt sind, um sicherzustellen, daß diese Systeme über ihre Einsatzdauer die geforderten technischen Parameter erfüllen.

### Beschreibung der Erfindung

Von diesem Stand der Technik ausgehend liegt der Erfindung die Aufgabe zugrunde, die Fehlerquellen und die Fehlermöglichkeiten bei der Überprüfung von Anordnungen zur Erfassung der Oberflächenstrukturen von auf einer Bildabtastfläche aufliegenden Fingern bzw. Handinnenflächen zu verringern.

Erfindungsgemäß ist bei Anordnungen der eingangs beschriebenen Art vorgesehen, daß ein Teil des Beleuchtungsstrahlenganges oder ein gesonderter Beleuchtungsstrahlengang auf Referenzstrukturen und von dort auf die Empfangsfläche der optoelektronischen Detektionseinrichtung gerichtet ist, wobei der Detektion der Oberflächenstrukturen und der Detektion der Referenzstrukturen gesonderte Teilbereiche der Empfangsfläche vorbehalten sind.

Mit der erfindungsgemäßen Anordnung ist es möglich, zu beliebigen Zeiten vor, während oder nach der Aufnahme von Finger- oder Handabdruckbildern auch Bilder von den Referenzstrukturen zu gewinnen, das Ergebnis einer Überprüfung der Qualitätsparameter zugrunde zu legen und daraus Schlußfolgerungen auf die optische und elektronische Güte der Anordnung zu ziehen.

In einer bevorzugten Ausgestaltung der Erfindung ist vorgesehen, daß die Referenzstrukturen ortsunveränderlich auf die Bildabtastfläche aufgebracht sind, wobei den Referenzstrukturen einerseits und der Auflage der Finger bzw. der Handinnenflächen andererseits gesonderte, einander nicht überschneidende Teilbereiche der Bildabtastfläche vorbehalten sind und ein gemeinsamer Beleuchtungsstrahlengang für diese Teilbereiche vorgesehen ist. Damit werden zur Durchführung des Gerätetests nicht mehr die Bereiche der Bildabtastfläche benötigt, die für das Auflegen der Finger- bzw. Handinnenflächen vorgesehen sind.

Ein wesentlicher Vorteil besteht darin, daß sich die Erfassung von Finger- bzw. Handabdrücken und die Aufnahme von Bildern der Referenzstrukturen nicht mehr gegenseitig ausschließen, demzufolge auch nicht mehr nur zeitlich nacheinander, sondern auch gleichzeitig ausgeführt werden können. Außerdem ist eine Verfälschung der Testergebnisse durch Verunreinigungen, die ihre Ursache im Auflegen der Finger bzw. Hände haben, zumindest für die Bereiche der Bildabtastfläche, die den Referenzstrukturen vorbehalten sind, ebenso ausgeschlossen wie das Auftreten von Fehlern, die sich aus dem Einbringen optischer Zwischenschichten (Öl, Wasser) zwischen Bildabtastfläche und einem ortsveränderlichen, mit den Referenzstrukturen versehenen Träger ergeben können. Die Nachteile des Standes der Technik sind damit aufgehoben.

Bei der letztgenannten Ausgestaltungsvariante sind die Referenzstrukturen unmittelbar auf die Bildabtastfläche aufgebracht, d.h. sie sind in der Objektebene angeordnet. Abweichend davon ist in einer weiteren Ausgestaltung der Erfindung vorgesehen, daß die Referenzstrukturen zwar ebenfalls ortsunveränderlich, jedoch außerhalb der Objekt-ebene, beispielsweise an der Eintrittfläche für den Beleuchtungsstrahlengang und/oder an der Austrittfläche für die von der Bildabtastfläche reflektierte Strahlung positioniert sind. So erreicht man mit höchster Zuverlässigkeit, daß die Referenzstrukturen dem Kontakt mit dem abzubildenden Finger bzw. der Handinnenfläche entzogen sind.

Weiterhin ist die optoelektronische Detektionseinrichtung mit einer Auswerteschaltung verknüpft, in welcher die von den Referenzstrukturen gewonnenen Bilder, die den Ist-Zustand der Anordnung charakterisieren, einem Vergleich mit elektronisch gespeicherten, den Soll-Zustand vorgebenden Daten unterzogen und aus diesem Vergleich Schlußfolgerungen auf die Einhaltung oder Nichteinhaltung der gerätespezifischen Qualitätsparameter gezogen werden. Auf diese Weise ist eine selbsttätige Kontrolle möglich.

Diesbezüglich liegt es im Rahmen der Erfindung, daß eine Ansteuerschaltung vorgesehen ist, durch die beispielhaft bei jeder Inbetriebnahme und/oder jeweils nach Ablauf einer vorgegebenen Betriebsdauer eine Aufnahme der Referenzstrukturen und der Vergleich der aufgenommenen Bilder mit den gespeicherten Daten veranlaßt wird. Führt dieser Vergleich zu einem negativen Ergebnis, so kann durch Auslösen eines Warn-signals, einer Fehlermeldung am Gerätedisplay oder auch durch Ausgabe eines Ausschaltimpulses an die Gerätesteuerung die fehlerhafte Erfassung von Finger- bzw. Handabdrücken verhindert werden, wenn Mindestanforderungen nicht eingehalten sind.

Zusätzlich oder auch alternativ zur vorbeschriebenen Ausgestaltung ist vorgesehen, daß Mittel zum manuellen Auslösen der optischen Erfassung der Referenzstrukturen vorhanden sind und damit zu willkürlich festzulegenden Zeitpunkten die Überprüfung veranlaßt werden kann. Hierzu kann beispielhaft ein mit der Ansteuerschaltung verknüpfter Handtaster vorhanden sein, der vor, während oder nach der Erfassung von Finger- bzw. Handabdrücken betätigt wird.

Weiterhin kann eine Abdeckung über den auf die Bildabtastfläche aufgebrachten Referenzstrukturen vorgesehen sein. So wird verhindert, daß die Referenzstrukturen der ständigen Berührung durch aufgelegte Finger bzw. Hände ausgesetzt sind und dabei verschmutzen.

Alternativ oder auch zusätzlich zur ortsunveränderlichen Anordnung der Referenzstrukturen an der Bildabtastfläche, der Lichteintrittfläche oder auch der Lichtaustrittfläche am Abtastprisma ist es denkbar, eine optische Einrichtung zur Einspiegelung und/oder Einblendung von Referenzstrukturen in den Beleuchtungsstrahlengang vorzusehen, so daß auch auf diese Weise Bildinformationen von Referenzstrukturen auf die Empfangsfläche der optoelektronischen Detektionseinrichtung gelangen und in der vorbeschriebenen Weise der Kalibrierung der Anordnung zugrunde gelegt werden können.

Als Referenzstrukturen sind beispielsweise Strichmarken verschiedener Strichbreiten sowie unterschiedlicher Strichabstände und -ausrichtungen vorstellbar. Damit ist insbesondere die Kontrastübertragung (Contrast Transfer Function - CTF) bestimmbar, die als Grundlage für die Bewertung der Modulationsübertragung (Modulation Transfer Function - MTF) dient. Denkbar ist es auch, Strukturen mit kontrastreichen Hell-Dunkel- und Dunkel-Hell-Übergängen in horizontaler und vertikaler Richtung vorzusehen, so daß die MTF mittels Fourieranalyse überprüft werden kann.

Ebenso ist unter den Referenzstrukturen auch ein leeres Feld vorsehbar, welches zur Überprüfung der Linearität und des Rauschens der Anordnung dient, indem bei konstanter Beleuchtung der Shutter der Detektionseinrichtung in definierten Schritten verstellt und das jeweils erzielte Ausgangssignal mit den aus dem Speicher abrufbaren Daten verglichen wird.

Denkbar ist weiterhin, zwei im definierten Abstand zueinander angeordnete Testmarken vorzusehen, die zur Überprüfung des Abbildungsmaßstabes dienen. So ist die Überprüfung des Abbildungsmaßstabes ebenfalls in zeitlichen Abständen möglich, indem die jeweiligen Meßergebnisse dem Vergleich mit bei der Fertigung gespeicherten Werten, bezogen auf die beiden Ausdehnungsrichtungen der Bildabtastfläche, zugrunde gelegt werden.

Neben dem bisher beschriebenen Lösungsweg wird die Aufgabe der Erfindung weiterhin auch dadurch gelöst, daß in den Beleuchtungsstrahlengang, auf die Objektfläche und/oder in die von der Bildabtastfläche reflektierte Strahlung halbtransparente Referenzstrukturen eingebracht sind, dabei sowohl die zu erfassende Oberflächenstruktur (der Finger oder Handinnenfläche) als auch die halbtransparenten Referenzstrukturen mit der Strahlung beaufschlagt werden und die auf die Empfangsfläche der Detektionseinrichtung treffende Strahlung sowohl die Bildinformation über die Oberflächenstruktur als auch die Bildinformation über die Referenzstrukturen mit sich führt.

Dabei können die Referenzstrukturen so positioniert sein, daß sie von der zu erfassenden Oberflächenstruktur überdeckt werden, d.h. weder vom Strahlengang noch von der Empfangsfläche sind gesonderte Bereiche ausschließlich der Erfassung der Oberflächenstruktur einerseits und ausschließlich der Erfassung der Referenzstrukturen andererseits vorbehalten.

Allerdings ist hierbei vorgesehen, die Auswerteschaltung gemäß Anspruch 6 auszubilden. Diesbezüglich ist in der Auswerteschaltung eine erste Rechenfunktion zur Ermittlung eines Korrekturfaktors iᵢⱼ für jedes Bildelement ij vorgesehen nach kᵢⱼ = Soll-Grauwert / Ist-Grauwert, wobei jedes Bildelement ij einem Einzelsensor der Empfangsfläche entspricht. Die Soll-Grauwerte werden vorteilhaft für jeden Einzelsensor bei gleichmäßig hellem strukturfreien Bild ermittelt und es ist weiterhin eine zweite Rechenfunktion vorgesehen, durch welche der ermittelte Ist-Grauwert eines jeden Bildelementes ij mit dem zugehörigem Korrekturfaktor kᵢⱼ multipliziert wird.

Mit dieser erfindungsgemäßen Anordnung erreicht man ebenfalls, daß eine Überprüfung bzw. Kalibrierung sowohl bei aufliegenden Fingern bzw. Handflächen als auch bei freier Bildabtastfläche vorgenommen werden kann. Denn mit der wie dargestellt ausgebildeten Auswerteschaltung kann das von einer Oberflächenstruktur aufgenommene Bild derart bearbeitet werden, daß der für jedes Bildelemente ij ermittelte Grauwert so korrigiert wird, daß man ein Bild erhält, das in den Bereichen, in denen der Finger oder die Handfläche aufliegt, nur die Strukturen des Fingers bzw. der Handfläche aufweist und die Referenzstruktur "herauskorrigiert" worden ist. Als Voraussetzung dafür ist einzuhalten, daß die Korrekturwerte k so gespeichert werden, daß eine eindeutige Zuordnung zu den entsprechenden Bildelementen ij möglich ist.

Wird nun beispielsweise ein Testlauf ohne aufgelegten Finger bzw. Handfläche ausgeführt, so ergibt sich bei richtigen Korrekturwerten kᵢⱼ ein strukturfreies gleichmäßig helles Bild. Tritt dieser Fall nicht ein, so sind die Korrekturwerte kᵢⱼ neu einzulesen.

### Kurze Beschreibung der Zeichnungen

Die Erfindung wird nachfolgend anhand eines Ausführungsbeispieles näher erläutert. In den zugehörigen Zeichnungen zeigen
- Fig.1: das Prinzip einer vergleichbaren Anordnung nach dem bekannten Stand der Technik
- Fig.2: die Prinzipdarstellung der erfindungsgemäßen Anordnung
- Fig.3: die Aufteilung der Bildabtastfläche in einer Draufsicht
- Fig.4: die Positionierung von Referenzstrukturen in einer ersten Variante
- Fig.5: Beispiele für Referenzstrukturen

### Ausführliche Beschreibung der Zeichnungen

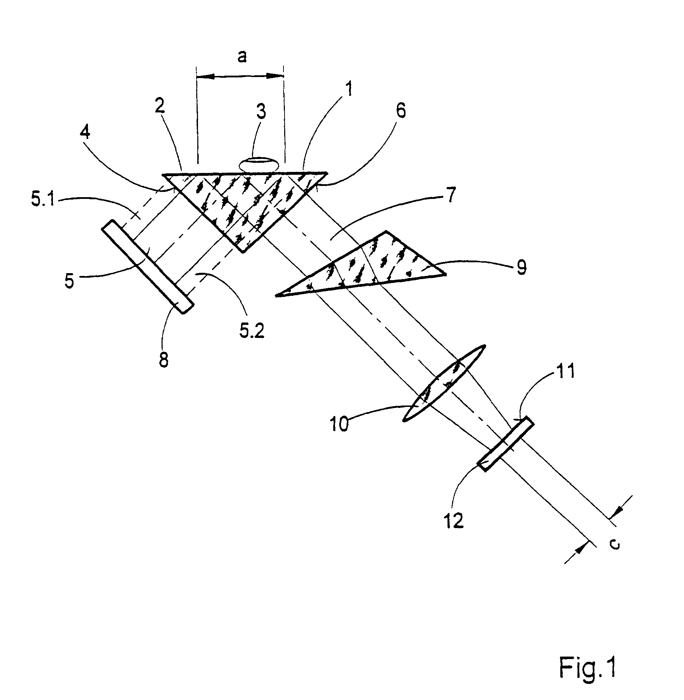

In Fig.1 ist eine Anordnung zur Aufnahme von Fingerabdrücken dargestellt, wie sie aus dem Stand der Technik bekannt ist. Auf die Bildabtastfläche 1 eines Abtastprismas 2 ist hier ein Finger 3 aufgelegt, von dem der Abdruck erfaßt werden soll. Das Abtastprisma 2 weist eine Eintrittfläche 4 für einen Beleuchtungsstrahlengang 5 und eine Austrittfläche 6 für das innerhalb des Abtastprismas 2 von der Bildabtastfläche 1 reflektierte Licht, im folgenden als Objektstrahlengang 7 bezeichnet, auf.

Der Beleuchtungsstrahlengang 5 geht von einer Beleuchtungsquelle 8 aus, die beispielsweise als zweidimensionale Anordnung einer Vielzahl von lichtemittierenden Dioden (LED's) mit nachgeschaltetem Diffusor ausgebildet ist. Der Beleuchtungsstrahlengang 5 ist im Inneren des Abtastprismas 2 unter einem Winkel α auf die Bildabtastfläche 1 gerichtet, der die Gewinnung von Bildern des Fingerabdruckes nach dem Prinzip der gestörten Totalreflektion ermöglicht.

Der Objektstrahlengang 7 ist durch ein Korrekturprisma 9 und ein Objektiv 10 hindurch auf die photoempfindliche Empfangsfläche 11 einer optoelektronischen Detektionseinrichtung 12 gerichtet. Die Empfangsfläche 11 sei beispielhaft aus einer Vielzahl von in einem orthogonalen Raster angeordneten einzelnen Sensoren gebildet, und die optoelektronische Detektionseinrichtung 12 sei Teil einer CCD-Kamera, die in an sich üblicher Weise mit einer Auswerteschaltung für die an ihrem Ausgang abgreifbaren elektronischen Bildinformationen verknüpft ist.

Aus Fig.1 ist weiterhin ersichtlich, daß von der Bildabtastfläche 1 lediglich ein Bereich mit der Breite a für das Auflegen des Fingers (oder mehrerer Finger oder einer Handinnenfläche) vorgesehen ist, während die Randbereiche ungenutzt sind. Auch von der Empfangsfläche 11 wird lediglich ein Bereich genutzt, der in der Zeichenebene der Fig.1 die Breite c hat und auf den der Objektstrahlengang 7 fokussiert ist.

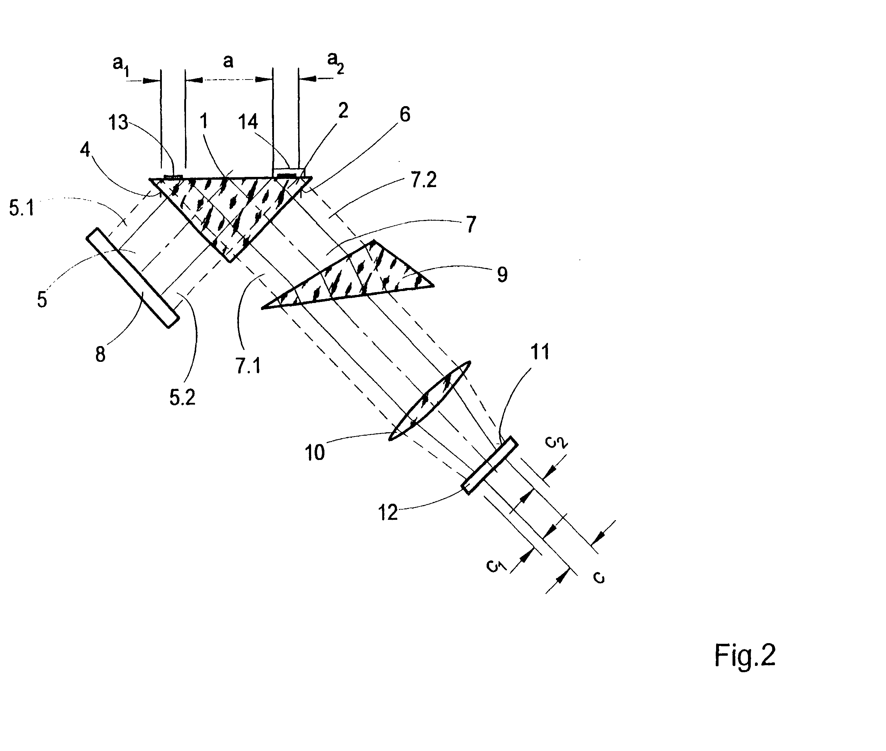

Um eine Kalibrierung der Anordnung vornehmen zu können ist, wie in Fig.2 erkennbar, vorgesehen, daß in den mit a₁ und a₂ bezeichneten Randbereichen der Bildabtastfläche 1 , die außerhalb der für die Erfassung der Finger- bzw. Handabdruckbilder vorgesehenen Breite a liegen, Referenzstrukturen 13 aufgebracht sind. Auf diese Referenzstrukturen 13 treffen Strahlungsanteile 5.1 und 5.2 des Beleuchtungsstrahlenganges 5, und die von den Randbereichen a₁ und a₂ reflektierten Strahlungsanteile 5.1 und 5.2 der Beleuchtungsstrahlung erreichen als Strahlungsanteile 7.1 und 7.2 des Objektstrahlenganges 7 die Empfangsfläche 11, wo sie auf mit c₁ und c₂ bezeichnete Randbereiche treffen. Die Randbereiche c₁ und c₂ befinden sich außerhalb der Breite c, die der Erfassung der Finger- bzw. Handabdruckbilder vorbehalten ist.

Wie im folgenden gezeigt wird, sind die Referenzstrukturen 13 so ausgebildet, daß ihre von der optoelektronischen Detektionseinrichtung 12 empfangenen und an die Auswerteschaltung weitergegebenen Bilder einem Vergleich mit elektronisch gespeicherten Daten, die als Maß für die Qualitätsparameter der Anordnung dienen, unterzogen werden können und im Ergebnis dieses Vergleiches auf die Einhaltung oder auf Abweichungen geschlossen werden kann.

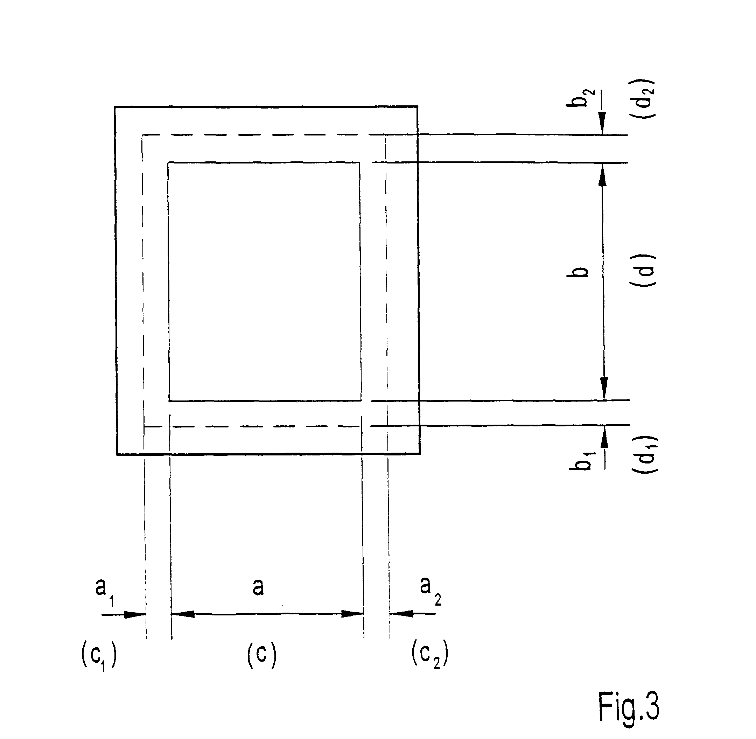

Aus Fig.3, einer Draufsicht auf die Bildabtastfläche 1, ist ersichtlich, daß der durch a und b bestimmte Flächenabschnitt zur Aufnahme von Finger- bzw. Handabdruckbildern vorgesehen ist, während jeweils die Randbereiche a₁, a₂, b₁ und b₂ dem Aufbringen von Referenzstrukturen vorbehalten sind. So wie die Randbereiche a₁ und a₂ der Bildabtastfläche 1 mit den Randbereichen c₁ und c₂ der Empfangsfläche 11 korrespondieren, sind auch den Randbereichen b₁ und b₂ der Bildabtastfläche 1 auf der Empfangsfläche 11 Randbereiche zugeordnet, die allerdings in Fig.2 nur in ihrer seitlichen Projektion darstellbar sind, da sie außerhalb der Zeichenebene liegen und parallel zu dieser verlaufen.

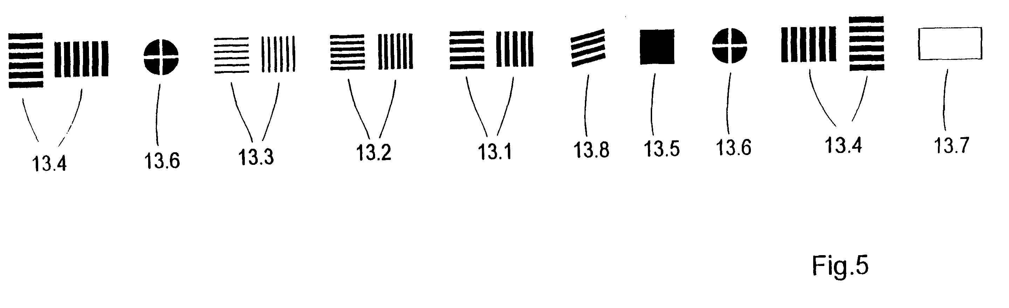

Wie die Referenzstrukturen 13 ausgebildet sein können, ist in Fig.5 dargestellt. So dienen die Strukturen 13.1 , 13.2 und 13.3, die aus mehreren parallel verlaufenden und in Gruppen rechtwinklig zueinander angeordneten Linien gebildet sind, der Messung des Kontrastes, wobei das Meßergebnis mit den gespeicherten Anforderungen für die MTF bei beispielsweise 10, 8 und 6 LP/mm horizontal und vertikal verglichen wird. Zusätzlich werden die von den Strukturen 13.4 gewonnenen Bilder dem Vergleich mit den MTF-Anforderungen für 1 LP/mm zugrunde gelegt. Die ermittelten Kontrastwerte sind ein Maß für die mit der Anordnung erzielbare MTF.

Anhand der Strukturen 13.4 ist auch die Überprüfung des Abbildungsmaßstabes im Nahbereich durch Ausmessen der Mittenabstände der Linien möglich, wobei beispielhaft die Ortsfrequenz von 1 LP/mm zugrunde liegt.

Anhand der Struktur 13.5 kann mittels Fourieranalyse der Hell-Dunkel- und der Dunkel-Hell-Übergänge in horizontaler und vertikaler Richtung die MTF bestimmt und mit den in gespeicherter Form vorliegenden Sollwerten für diese Übergänge verglichen werden.

Der Mittenabstand der Strukturen 13.6 ist sehr genau bekannt. Durch Auszählen der Bildpunkte zwischen den Mitten dieser Strukturen 13.6 und Verhältnisbildung zum Mittenabstand wird der Abbildungsmaßstab und die geometrische Verzerrung ermittelt.

Ein leeres Feld 13.7 kann einer Linearitätsprüfung zugrunde gelegt werden, sofern bei konstanter Beleuchtung der Shutter der Detektionseinrichtung in definierten Schritten verstellt und das jeweils verfügbare Ausgangssignal mit gespeicherten Vorgaben verglichen wird.

Das Vorhandensein aller Graustufen schließlich ist mit einer Struktur 13.8 möglich. Dabei ist die Neigung der Linien gegenüber den Linien der übrigen Strukturen so gewählt, daß alle Graustufen auftreten und damit ihre Überprüfung sichergestellt ist.

Die Überprüfung des Signal-Rausch-Verhältnisses ist anhand der Struktur 13.7 möglich, indem in einem ausreichend großen Flächenabschnitt das räumliche Rauschen und an ausgewählten Einzelsensoren der Empfangsfläche 11 das zeitliche Rauschen bestimmt und die so erzielten Werte auf Einhaltung der zulässigen Abweichungen gegenüber gespeicherten Vorgaben überprüft werden.

Ein von der Einhaltung der vorgegebenen Parameter bzw. deren Nichteinhaltung abhängiges, an der Auswerteschaltung verfügbares Ausgangssignal kann zur Auslösung eines akustisch, optisch oder anderweitig wahrnehmbaren Hinweises für das Bedienungspersonal genutzt werden.

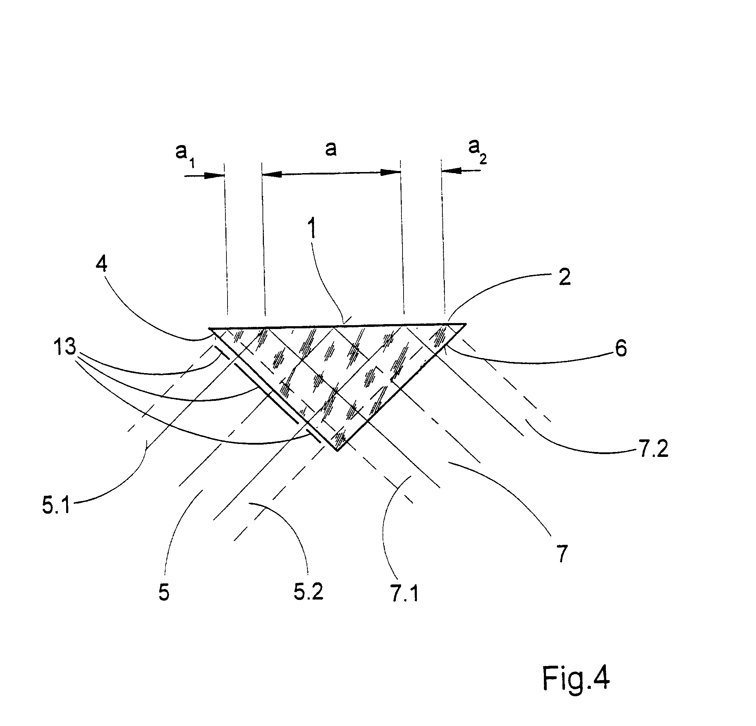

In Ausgestaltungen der Erfindung nach Fig.4 ist vorgesehen, daß die Referenzstrukturen 13 nicht oder nur zum Teil auf die Bildabtastfläche 1, sondern auch auf die Eintrittfläche 4 aufgebracht sind. Dabei sind die Referenzstrukturen 13 jeweils in Abschnitten der Eintrittfläche 4 positioniert, die außerhalb des Bereiches liegen, durch den das zur Aufnahme der Finger- bzw. Handabdrücke erforderliche Licht in das Abtastprisma 2 eintritt.

Alternativ hierzu können Referenzstrukturen 13 auch auf die Austrittfläche 6 des Abtastprismas 2 aufgebracht sein. Die Positionierung auf der Eintrittfläche 4 und auch auf der Austrittfläche 6 hat den Vorteil, daß die Referenzstrukturen 1 3 einer Berührung durch die auf die Bildabtastfläche 1 aufzulegenden Finger bzw. Hände entzogen sind und somit einer Verschmutzung bzw. Verfälschung des Referenzsignales vorgebeugt wird. Alternativ zu letztgenannter Ausgestaltung können, wie in Fig.2 schematisch angedeutet, über den auf die Bildabtastfläche 1 aufgebrachten Referenzstrukturen 13 schützende Abdeckungen 14 vorhanden sein.

## Patentansprüche

1. Anordnung zur Erfassung der Oberflächenstrukturen von auf einer Bildabtastfläche (1) aufliegenden Fingern (3), Handinnenflächen oder sonstigen Hautpartien, wobei die Bildabtastfläche (1) an einem Abtastprisma (2) ausgebildet ist, im Inneren des Abtastprismas (2) ein Beleuchtungsstrahlengang (5) auf die Bildabtastfläche (1) gerichtet ist und die von dort reflektierte Strahlung auf die Empfangsfläche (11) einer optoelektronischen Detektionseinrichtung (12) trifft, **dadurch gekennzeichnet, daß** ein Teil des Beleuchtungsstrahlenganges (5.1,5.2) oder ein gesonderter Beleuchtungsstrahlengang auf Referenzstrukturen (13) und von dort auf die Empfangsfläche (11) gerichtet ist, wobei der Detektion der Oberflächenstrukturen und der Detektion der Referenzstrukturen (13) gesonderte Teilbereiche (c, c₁, c₂) der Empfangsfläche (11) vorbehalten sind.

2. Anordnung nach Anspruch 1, **dadurch gekennzeichnet, daß** die Referenzstrukturen (13) ortsunveränderlich auf das Abtastprisma (2), bevorzugt auf dessen Eintrittsfläche (4), besonders bevorzugt auf dessen Austrittsfläche (6), ganz besonders bevorzugt auf dessen Bildabtastfläche (1) aufgebracht sind, wobei den Referenzstrukturen (13) einerseits und den zu erfassenden Oberflächenstrukturen andererseits gesonderte, einander nicht überschneidende Teilbereiche (a, a₁, a₂) vorbehalten sind und ein gemeinsamer Beleuchtungsstrahlengang (5) für diese Teilbereiche (a, a₁, a₂) vorgesehen ist.

3. Anordnung nach dem Oberbegriff des Anspruchs 1, **dadurch gekennzeichnet, daß** in den Beleuchtungsstrahlengang (5) und/oder in die von der Bildabtastfläche (1) reflektierte Strahlung halbtransparente Referenzstrukturen eingebracht sind.

4. Anordnung nach Anspruch 3, **dadurch gekennzeichnet, daß** die halbtransparenten Referenzstrukturen ortsunveränderlich auf das Abtastprisma (2) aufgebracht oder in den Strahlengang eingespiegelt sind, wobei sich die zur Erfassung der Oberflächenstrukturen und die zur Erfassung der Referenzstrukturen vorgesehenen Querschnittsbereiche des Strahlenganges und auch die zur Detektion der Oberflächenstrukturen und die zur Detektion der Referenzstrukturen vorgesehenen Flächenabschnitte der Empfangsfläche (11) überschneiden.

5. Anordnung nach einem der vorgenannten Ansprüche, **dadurch gekennzeichnet, daß** die optoelektronische Detektionseinrichtung (12) mit einer Auswerteschaltung verknüpft ist, in welcher die von den Referenzstrukturen (13) gewonnenen Bilder einem Vergleich mit gespeicherten Daten unterzogen und aus dem Vergleich Schlußfolgerungen auf die Einhaltung oder Nichteinhaltung vorgegebener Geräteparameter gezogen werden.

6. Anordnung nach Anspruch 3 bis 5, **dadurch gekennzeichnet, daß** in der Auswerteschaltung eine erste Rechenfunktion zur Ermittlung eines Korrekturfaktors i für jedes Bildelement ij vorgesehen ist nach kᵢⱼ = Soll-Grauwert / Ist-Grauwert, wobei jedes Bildelement ij einem Einzelsensor der Empfangsfläche (1 1 ) entspricht, die Soll-Grauwerte für jeden Einzelsensor bei gleichmäßig hellem strukturfreien Bild ermittelt werden und weiterhin eine zweite Rechenfunktion vorgesehen ist, durch welche der ermittelte Ist-Grauwert eines jeden Bildelementes ij mit dem zugehörigen Korrekturfaktor kᵢⱼ multipliziert wird, wobei sich ein von den Referenzstrukturen freies Bild der Oberflächenstruktur ergibt.

7. Anordnung nach einem der vorgenannten Ansprüche, **dadurch gekennzeichnet, daß** eine Ansteuerschaltung vorgesehen ist, durch die bei jeder Inbetriebnahme und/oder jeweils nach Ablauf einer vorgegebenen Betriebsdauer eine Erfassung der Referenzstrukturen (1 3) und der Vergleich mit den gespeicherten Daten ausgelöst wird.

8. Anordnung nach einem der vorgenannten Ansprüche, **dadurch gekennzeichnet, daß** eine Ansteuerschaltung vorgesehen ist, durch die manuell die Erfassung der Referenzstrukturen (13) ausgelöst und damit zu beliebigen Zeitpunkten der Vergleich mit den gespeicherten Daten vorgenommen werden kann.

9. Anordnung nach Anspruch 2, **dadurch gekennzeichnet, daß** Abdeckungen (14) für die auf der Bildabtastfläche (1) aufgebrachten Referenzstrukturen (13) vorgesehen sind.

10. Anordnung nach einem der vorgenannten Ansprüche, **dadurch gekennzeichnet, daß** die auf das Abtastprisma (2) aufgebrachten Referenzstrukturen (13) gedruckt, geritzt, geätzt, in Form eines Filmes aufgeklebt oder anderweitig optisch wirksam aufgebracht sind.

11. Anordnung nach einem der vorgenannten Ansprüche, **dadurch gekennzeichnet, daß** eine optische Einrichtung zur Einspiegelung und/oder Einblendung der Referenzstrukturen (13) in den Beleuchtungsstrahlengang (5) oder in den von der Bildabtastfläche (1) reflektierten Strahlengang vorgesehen ist.

12. Anordnung nach einem der vorgenannten Ansprüchen, **dadurch gekennzeichnet, daß** als Referenzstrukturen (13) Strichmarken verschiedener Strichbreiten sowie mit unterschiedlichen Strichabständen und Strichausrichtungen vorhanden und zur Kontrolle des Bildkontrastes, der MTF, des Abbildungsmaßstabes, der geometrischen Verzerrung, der Graustufenlinearität, der Grauwertanzahl und/oder des Signal-Rausch-Verhältnisses ausgelegt sind.

## Claims

1. An assembly for detecting the superficial structures of fingers (3), palms or other regions of the skin resting on an image scanning surface (1), the image scanning surface (1) being formed on a scanning prism (2), an illumination beam path (5) in the interior of the scanning prism (2) being directed onto the image scanning surface (1) and the radiation which is reflected there impinging on the reception surface (11) of an optoelectronic detection device (12),**characterised in that** a portion of the illumination beam path (5.1, 5.2) or a separate illumination beam path is directed onto reference structures (13) and from there to the receiving surface (11), whereby separate portions (c, c₁, c₂) of the receiving surface (11) are reserved for the detection of the superficial structures and the detection of the reference structures.

2. An assembly as claimed in Claim 1, **characterised in that** the reference structures (13) are applied with a constant position to the scanning prism (2), preferably on its entry surface (4), particularly preferably on its exit surface (6), very particularly preferably on its image scanning surface (1), whereby separate regions (a, a₁, a₂), which do not overlap with one another, are reserved for the reference structures (13), on the one hand, and the superficial structures to be detected, on the other hand, and a common illumination beam path (5) is provided for these regions (a, a₁, a₂).

3. An assembly as claimed in the preamble of Claim 1, **characterised in that** semi-transparent reference structures are positioned in the illumination beam path (5) and/or in the radiation reflected from the image scanning surface (1).

4. An assembly as claimed in Claim 3, **characterised in that** the semitransparent reference structures are applied with a constant position to the scanning prism (2) or are reflected into the beam path, whereby the cross-sectional regions of the beam path provided for detecting the superficial structures and for detecting the reference structures and also the surface sections of the receiving surface (11) provided for detecting the superficial structures and for detecting the reference structures overlap with one another.

5. An assembly as claimed in one of the preceding claims, **characterised in that** the optoelectronic detection device (12) is coupled to an evaluation circuit, in which the images produced from the reference structures (13) are subjected to a comparison with stored data and conclusions are drawn from the comparison as to the maintenance or non-maintenance of predetermined device parameters.

6. An assembly as claimed in Claims 3 to 5, **characterised in that** provided in the evaluation circuit is a first computing function for determining a correction factor iᵢⱼ for each image element ij in accordance with kᵢⱼ = reference grey value/actual grey value, whereby each image element ij corresponds to an individual sensor on the receiving surface (11), the reference grey values for each individual sensor are determined with a uniformly bright structure-free image and a second computing function is also provided, by which the determined actual grey value of each image element ij is multiplied by the associated correction factor kᵢⱼ, whereby an image, which is free of the reference structures, of the superficial structure is produced.

7. An assembly as claimed in one of the preceding claims, **characterised in that** a control circuit is provided, by which detection of the reference structures (13) and the comparison with the stored data is initiated each time operation is commenced and/or after the elapse of a predetermined operational period.

8. An assembly as claimed in one of the preceding claims, **characterised in that** a control circuit is provided, by which the detection of the reference structures (13) is initiated manually and the comparison with the stored data can thus be effected at any desired times.

9. An assembly as claimed in Claim 2, **characterised in that** covers (14) are provided for the reference structures (13) applied to the image scanning surface (1).

10. An assembly as claimed in one of the preceding claims, **characterised in that** the reference structures (13) applied to the scanning prism (2) are printed, scratched, etched, secured by adhesive in the form of a film or are applied in some other optically effective manner.

11. An assembly as claimed in one of the preceding claims, **characterised in that** an optical device is provided for reflecting and/or superimposing the reference structures (13) into the illumination beam path (5) or into the beam path reflected from the image scanning surface (1).

12. An assembly as claimed in one of the preceding claims, **characterised in that** lines constituting the reference structures (13) are present with different widths and with different spacings and orientations and are designed for monitoring the image contrast, the MTF, the imaging scale, the geometrical distortion, the grey scale linearity, the grey value number and/or the signal/noise ratio.

## Revendications

1. Dispositif pour détecter des structures superficielles de doigts (3), de paumes de la main ou d'autres parties de la peau reposant sur une surface d'analyse d'image (1), la surface d'analyse d'image (1) étant réalisée sur un prisme d'analyse (2), à l'intérieur du prisme d'analyse (2) un faisceau de rayons d'éclairage (5) est dirigé vers la surface d'analyse d'image (1) et le rayonnement, réfléchi à cet endroit, parvient sur la surface de réception (11) d'un dispositif optoélectronique de détection (12), **caractérisé en ce qu'**une partie du faisceau de rayons d'éclairage (5.1, 5.2) ou un faisceau de rayons d'éclairage séparé est dirigé sur des structures de référence (13) et de là sur la surface de réception (11), les zones partielles (c,c₁,c₂)séparées de la surface de réception (11) étant réservées à la détection des structures superficielles et à la détection des structures de référence (13).

2. Dispositif selon la revendication 1, **caractérisé en ce que** les structures de référence (13) sont appliquées en un emplacement fixe sur le prisme d'analyse (2), de préférence sur sa surface d'entrée (4), de manière particulièrement préférée sur sa surface de sortie (6), de manière tout particulièrement préférée sur sa surface d'analyse d'image (1), les zones partielles (a, a₁, a₂) séparées, ne se recoupant les unes les autres, étant réservées aux structures de référence (13) d'une part et aux structures superficielles à détecter d'autre part, et un faisceau de rayons d'éclairage (5) commun à ces zones partielles (a, a₁, a₂) étant prévu.

3. Dispositif selon le préambule de la revendication 1, **caractérisé en ce que** des structures de référence semi-transparentes sont introduites dans le faisceau de rayons d'éclairage (5) et/ou dans le rayonnement réfléchi par la surface d'analyse d'image (1).

4. Dispositif selon la revendication 3, **caractérisé en ce que** les structures de référence semi-transparentes sont appliquées en un emplacement fixe sur le prisme d'analyse (2) ou introduites par réflexion dans le faisceau de rayons, les zones de la section transversale du faisceau de rayons, prévues pour la détection des structures superficielles et la détection des structures de référence, ainsi que les parties de surface de la surface de réception (11), prévues pour la détection des structures superficielles et la détection des structures de référence, se recoupant.

5. Dispositif selon l'une des revendications précédentes, **caractérisé en ce que** le dispositif optoélectronique de détection (12) est lié à un circuit d'exploitation dans lequel les images obtenues des structures de référence (13) sont soumises à une comparaison avec des données mémorisées et de la comparaison sont tirées des conclusions quant au respect ou au non-respect de paramètres prédéfinis de l'appareil.

6. Dispositif selon les revendications 3 à 5, **caractérisé en ce que** dans le circuit d'exploitation est prévue une première fonction de calcul pour déterminer un facteur de correction (iᵢⱼ) pour chaque élément d'image (ij) selon (kᵢⱼ = valeur de gris de consigne/valeur de gris réelle), chaque élément d'image (ij) correspondant à un capteur individuel de la surface de réception (11), les valeurs de gris pour chaque capteur individuel étant déterminées pour une image uniformément claire sans structure, et en outre une deuxième fonction de calcul étant prévue par laquelle la valeur de gris réelle déterminée de chaque élément d'image (ij) est multipliée par le facteur de correction (kᵢⱼ) correspondant, une image sans structure de référence de la structure superficielle étant obtenue.

7. Dispositif selon l'une des revendications précédentes, **caractérisée en ce qu'**il est prévu un circuit de commande par lequel, à chaque mise en service et/ou après expiration d'une durée de fonctionnement prédéfinie, une détection des structures de référence (13) et la comparaison avec les données mémorisées sont déclenchées.

8. Dispositif selon l'une des revendications précédentes, **caractérisé en ce qu'**il est prévu un circuit de commande par lequel la détection des structures de référence (13) est déclenchée manuellement et ainsi, à des instants quelconques, il est possible de procéder à la comparaison avec les données mémorisées.

9. Dispositif selon la revendications 2, **caractérisé en ce que** sont prévus des caches (14) pour les structures de référence (13) appliquées sur la surface d'analyse d'image (1).

10. Dispositif selon l'une des revendications précédentes, **caractérisé en ce que** les structures de référence (13) appliquées sur le prisme d'analyse (2) sont imprimées, entaillées, gravées, collées sous la forme d'une pellicule ou appliquées d'une autre manière avec effet optique.

11. Dispositif selon l'une des revendications précédentes, **caractérisé en ce qu'**il est prévu un dispositif optique pour introduire par réflexion et/ou superposer les structures de référence (13) dans le faisceau de rayons d'éclairage (5) ou dans le faisceau de rayons réfléchis par la surface d'analyse d'image (1).

12. Dispositif selon l'une des revendications précédentes, **caractérisé en ce que** comme structures de référence (13) sont prévues des marques en traits de différentes largeurs ainsi qu'avec des écartements et des orientations des traits différents, lesquelles marques sont conçues pour le contrôle du contraste d'image, de la MTF, de l'échelle de reproduction, de la distorsion géométrique, de la linéarité des degrés de gris, du nombre de valeurs de gris et/ou du rapport signal-bruit.
